# EUROPÄISCHE PATENTANMELDUNG

(11) **EP 3 176 504 A1**
(43) Veröffentlichungstag der Anmeldung: **07.06.2017**
(21) Anmeldenummer: 16188888.8
(22) Anmeldetag: 15.09.2016
(51) Int. Cl.: F23N 5/24, F23M 11/04

(54) **HEIZGERÄTEVORRICHTUNG, INSBESONDERE GAS- UND/ODER ÖLBRENNERVORRICHTUNG**

(30) Priorität: 03.12.2015 PT 15109012
(71) Anmelder: Bosch Termotecnologia S.A., 3800-533 Aveiro (PT)
(72) Erfinder: Oliveira, Jose, 3850-577 Branca (PT)
(74) Vertreter: Bee, Joachim

(57) **Zusammenfassung**

Es wird eine Heizgerätevorrichtung, insbesondere eine Gas- und/oder eine Ölbrennervorrichtung, vorgeschlagen, mit zumindest einer Schutzeinheit (10a-d), welche wenigstens eine Temperatursensoreinheit (12a-d) mit zumindest einem Temperatursensor (14a-d) und zumindest eine Auswerteeinheit (16a-d) aufweist, die zumindest ein Auswertemodul (18a-d; 20a, 20b) umfasst, welches zur Ermittlung zumindest einer Temperatur-Kenngröße mittels des Temperatursensors (14a-d) vorgesehen ist, wobei die Auswerteeinheit (16a-d) dazu vorgesehen ist, einen Fehlerbetriebszustand anhand der Temperatur-Kenngröße zu erkennen.

## Beschreibung

### Stand der Technik

Es sind bereits Heizgerätevorrichtungen vorgeschlagen worden, welche eine Schutzeinheit zur Thermosicherung aufweisen. Dabei kommen entweder insbesondere mechanische rückstellbare Thermosicherungen, wie beispielsweise Bimetallschalter, oder nicht rückstellbare Thermosicherungen, wie beispielsweise Schmelzschalter, zum Einsatz. Solche Thermosicherungen sind dazu vorgesehen, bei einer insbesondere diskreten materialabhängigen Referenztemperatur einen Brennvorgang zu unterbrechen.

### Offenbarung der Erfindung

Es wird eine Heizgerätevorrichtung, insbesondere eine Gas- und/oder Ölbrennervorrichtung, vorgeschlagen, mit zumindest einer Schutzeinheit, welche wenigstens eine Temperatursensoreinheit mit zumindest einem Temperatursensor, welcher insbesondere in einer Heizeinheit, vorzugsweise in einem Brennraum der Heizeinheit angeordnet ist, und zumindest eine Auswerteeinheit aufweist, die zumindest ein Auswertemodul umfasst, welches zur Ermittlung zumindest einer Temperatur-Kenngröße mittels des Temperatursensors vorgesehen ist, wobei die Auswerteeinheit dazu vorgesehen ist, einen Fehlerbetriebszustand anhand der Temperatur-Kenngröße zu erkennen. Durch die erfindungsgemäße Ausgestaltung der Heizgerätevorrichtung kann eine Betriebssicherheit erhöht werden. Ferner kann eine Referenztemperatur frei gewählt werden, wodurch eine Flexibilität und eine Benutzerfreundlichkeit verbessert werden kann. Zusätzlich ermöglicht die Verwendung eines Temperatursensors eine insbesondere kontinuierliche Messung einer Temperatur, wodurch eine Genauigkeit erhöht werden kann. Da durch die Messung mittels des Temperatursensors ein Brennvorgang gezielt angepasst werden kann und nur im Notfall abgebrochen werden muss, kann ferner eine Energieeffizienz verbessert werden.

Unter einer "Heizgerätevorrichtung" soll in diesem Zusammenhang insbesondere zumindest ein Teil, insbesondere eine Unterbaugruppe, eines Heizgeräts, insbesondere eines Gas- und/oder Ölbrenners, verstanden werden. Insbesondere kann die Heizgerätevorrichtung auch das gesamte Heizgerät, insbesondere den gesamten Gas- und/oder Ölbrenner, umfassen. Die Heizgerätevorrichtung weist insbesondere die Heizeinheit auf. Unter einer "Heizeinheit" soll insbesondere eine Einheit verstanden werden, welche vorzugsweise zur Erhitzung und/oder Verbrennung zumindest eines Mediums vorgesehen ist, und bevorzugt zumindest einen Brennraum aufweist, in welchem das Medium verbrannt wird. Bei dem Medium handelt es sich insbesondere um eine Verbrennungsluft und/oder einen Brennstoff und insbesondere um ein VerbrennungsluftBrennstoff-Gemisch. Um das Medium zu verbrennen, weist die Heizeinheit insbesondere einen Brenner auf.

Die Schutzeinheit ist vorzugsweise zu einer Thermosicherung vorgesehen und insbesondere dazu vorgesehen, zumindest ein Bauteil, insbesondere eine Heizeinheit, vorzugsweise einen Brennraum und/oder besonders bevorzugt eine Verbrennungseinheit, der Heizgerätevorrichtung vor einem Fehlerbetriebszustand zu schützen. Der Fehlerbetriebszustand ist insbesondere definiert durch eine Fehlfunktion eines Bauteils der Heizgerätevorrichtung und/oder durch ein Überschreiten einer Referenztemperatur-Kenngröße durch die Temperatur-Kenngröße. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Unter einer "Temperatursensoreinheit" soll insbesondere eine Einheit verstanden werden, welche zu einer vorzugsweise kontinuierlichen Messung einer Temperatur insbesondere durch eine Sensierung mittels zumindest eines Temperatursensors vorgesehen ist. Unter einer "kontinuierlichen Messung" soll dabei insbesondere eine Messung verstanden werden, welche, vorzugsweise unabhängig von einer Temperatur, in konstanten zeitlichen Abständen und/oder dauerhaft erfolgt. Insbesondere umfasst die Temperatursensoreinheit ein Sensorschutzelement, welches dazu vorgesehen ist, den Temperatursensor vor einer Überhitzung, insbesondere durch eine Brennerflamme, zu schützen. Bei dem Temperatursensor handelt es sich insbesondere um ein vorzugsweise wiederholt einsetzbares, elektrisches und/oder elektronisches Bauteil, welches zu einer Sensierung einer Temperatur vorgesehen ist. Der Temperatursensor ist insbesondere von einem mechanischen, vorzugsweise nicht rückstellbaren und/oder nur manuell rückstellbaren, Bauteil, wie beispielsweise einem Bimetallschalter und/oder einem Schmelzschalter, verschieden ausgebildet. Der Temperatursensor ist insbesondere innerhalb des Brennraums in einem Nahbereich zu dem Brenner angeordnet. Unter einem "Nahbereich" soll insbesondere ein räumlicher Bereich verstanden werden, welcher insbesondere aus Punkten gebildet ist, die jeweils einen minimalen Abstand von höchstens 100 mm, vorteilhaft von höchstens 50 mm, vorzugsweise von höchstens 10 mm und besonders bevorzugt von höchstens 5 mm von dem Brenner aufweisen.

Unter einer "Auswerteeinheit" soll insbesondere eine Einheit verstanden werden, welche dazu vorgesehen ist, auf Basis zumindest einer Messung der Temperatursensoreinheit und insbesondere einer Sensierung mittels zumindest eines Temperatursensors der Temperatursensoreinheit, eine Temperatur-Kenngröße zu ermitteln. Die Schutzeinheit weist insbesondere eine Funktionseinheit auf. Die Funktionseinheit ist insbesondere dazu vorgesehen, ein bei einer Messung von der Temperatursensoreinheit und/oder insbesondere bei einer Sensierung von dem Temperatursensor bereitgestelltes, vorzugsweise analoges, Ausgangssignal aufzubereiten, zu verstärken und/oder vorzugsweise ein in dem Ausgangssignal enthaltenes Störsignale zu vermindern. Dazu kann die Funktionseinheit insbesondere zumindest einen StromSpannungswandler, zumindest einen Verstärker und/oder zumindest einen Filter aufweisen. Das Auswertemodul ist insbesondere dazu vorgesehen, ein von der Temperatursensoreinheit bei einer Messung und/oder insbesondere von dem Temperatursensor bei einer Sensierung bereitgestelltes, vorzugsweise analoges, und insbesondere von der Funktionseinheit aufbereitetes Ausgangssignal in die Temperatur-Kenngröße umzuwandeln und insbesondere zu digitalisieren. Unter einer "Temperatur-Kenngröße" soll insbesondere eine Kenngröße verstanden werden, welche insbesondere mit einer Temperatur, insbesondere einer Temperatur der Heizeinheit, vorzugsweise des Brennraums und besonders bevorzugt des Brenners und vorteilhaft einer Brennflamme des Brenners, korreliert ist. Insbesondere kann zumindest die Schutzeinheit anhand der Temperatur-Kenngröße auf die Temperatur schließen und/oder die Temperatur ermitteln. Insbesondere kann die Temperatur-Kenngröße mit der Temperatur identisch sein. Vorteilhaft entspricht die Temperatur-Kennzahl einem die Temperatur abbildenden Wert. Insbesondere entspricht die Temperatur-Kenngröße einer, insbesondere direkten, Steuer- und/oder Regel-Kenngröße, beispielsweise zur Steuerung und/oder Regelung der Heizeinheit. Ferner ist die Temperatur-Kenngröße insbesondere zumindest teilweise von einem Brennungsvorgang abhängig. Bei der Temperatur-Kenngröße kann es sich vorteilhaft um ein elektrisches Signal, wie beispielsweise einen Strom und/oder eine Spannung, und/oder ein elektronisches Signal, wie beispielsweise ein Datensignal, vorzugsweise zumindest ein Bit handeln. Unter einem Fehlerbetriebszustand soll insbesondere ein Übersteigen eines Temperaturgrenzwertes, vorzugsweise ein Überhitzen sowie bevorzugt ein Temperaturstau, insbesondere Hitzestau, und insbesondere eine Fehlfunktion einzelner Komponenten der Heizgerätevorrichtung verstanden werden.

Um auf einfache Art und Weise eine Betriebssicherheit zu verbessern, wird vorgeschlagen, dass die Auswerteeinheit dazu vorgesehen ist, den Fehlerbetriebszustand anhand eines, insbesondere automatischen, Vergleichs der Temperatur-Kenngröße mit zumindest einer Referenztemperatur-Kenngröße, welche insbesondere in einer Speichereinheit hinterlegt ist und/oder von der Auswerteinheit selbst vorgegeben sein kann, zu erkennen. Die Auswerteeinheit ist insbesondere dazu vorgesehen, einen Fehlerbetriebszustand zu erkennen, wenn die Temperatur-Kenngröße von der Referenztemperatur-Kenngröße um einen fest vorgegebenen Wert und/oder insbesondere um zumindest 25 %, vorteilhaft um zumindest 10 %, vorzugsweise um zumindest 5 % und besonders bevorzugt um zumindest 1 % von der Referenztemperatur-Kenngröße abweicht. Unter einer "Referenztemperatur-Kenngröße" soll insbesondere eine Vergleichsgröße verstanden werden, bei welcher sich die Heizgerätevorrichtung in einem Normalbetrieb befindet.

Weiter wird vorgeschlagen, dass die Referenztemperatur-Kenngröße eine vordefinierte Kenngröße ist. Hierdurch kann ein Fehlbetrieb, insbesondere ein Überhitzen, vorzugsweise einer Heizeinheit, der Heizvorrichtung zuverlässig erkannt werden. Unter einer "vordefinierten Kenngröße" soll insbesondere eine vorteilhaft werkseitig und/oder besonders vorteilhaft von einen Benutzer vorgegebe Kenngröße verstanden werden. Die vordefinierte Kenngröße ist insbesondere in einer Speichereinheit der Hausgerätevorrichtung, insbesondere der Steuereinheit, gespeichert.

In einer Ausgestaltung der Erfindung wird vorgeschlagen, dass die Auswerteeinheit zur Ermittlung einer weiteren Temperatur-Kenngröße vorgesehen ist, wodurch eine Fehlererkennung weiter verbessert werden kann. Insbesondere weist die Temperatursensoreinheit einen weiteren Temperatursensor auf. Der weitere Temperatursensor kann insbesondere zumindest im Wesentlichen äquivalent zu dem Temperatursensor ausgebildet sein. Es ist jedoch auch denkbar, dass der weitere Temperatursensor verschieden von dem ersten Temperatursensor ausgebildet ist. Der weitere Temperatursensor ist in dem Brennraum angeordnet und weist insbesondere zumindest im Wesentlichen einen gleichen Abstand zum Brenner auf, wie der Temperatursensor. Es ist jedoch auch denkbar, dass der Temperatursensor und der weitere Temperatursensor in unterschiedlichen Abständen zum Brenner innerhalb des Brennraums angeordnet sind. Die Temperatur-Kenngröße und die weitere Temperatur-Kenngröße entsprechen insbesondere einer gleichen Kenngröße. Die Temperatur-Kenngröße und die weitere Temperatur-Kenngröße unterscheiden sich dabei insbesondere lediglich um einen Betrag und/oder insbesondere einen Wert der Kenngröße. Alternativ können die Temperatur-Kenngröße und die weitere Temperatur-Kenngröße auch unterschiedliche Kenngrößen aufweisen. Die Auswerteeinheit ist insbesondere dazu vorgesehen, gleichzeitig und/oder zeitlich versetzt zueinander die Temperatur-Kenngröße und die weiteren Temperatur-Kenngrößen zu ermitteln.

In einer bevorzugten Ausgestaltung der Erfindung wird vorgeschlagen, dass das Auswertemodul zur Ermittlung zumindest einer weiteren Temperatur-Kenngröße mittels des Temperatursensors, vorgesehen ist. Hierdurch kann vorteilhaft ein Vergleich mehrerer Temperatur-Kenngrößen erfolgen und insbesondere ein Temperaturstau und vorteilhaft ein Fehlbetrieb einzelner Komponenten, wie beispielsweise des Temperatursensors, der Heizgerätevorrichtung erkannt werden.

In einer besonders bevorzugten Ausgestaltung der Erfindung wird vorgeschlagen, dass die Auswerteeinheit zumindest ein weiteres Auswertemodul aufweist, welches zur Ermittlung zumindest einer weiteren Temperatur-Kenngröße mittels des Temperatursensors vorgesehen ist. Das weitere Auswertemodul ist insbesondere zumindest im Wesentlichen äquivalent zu dem Auswertemodul ausgebildet. Hierdurch kann zumindest eine homogene Redundanz geschaffen werden, wodurch insbesondere ein Fehlbetriebszustand und/oder ein Ausfall zumindest eines der Auswertemodule erkannt und/oder insbesondere kompensiert werden kann.

In einer besonders vorteilhaften Ausgestaltung der Erfindung wird vorgeschlagen, dass die Temperatursensoreinheit zumindest einen weiteren Temperatursensor umfasst und das weitere Auswertemodul zur Ermittlung zumindest einer weiteren Temperatur-Kenngröße mittels des weiteren Temperatursensors vorgesehen ist. Der weitere Temperatursensor ist insbesondere zumindest im Wesentlichen äquivalent zu dem Temperatursensor ausgebildet und/oder vorteilhaft an einer äquivalenten Position im Brennraum und zwar im selben Abstand zum Brenner wie der Temperatursensor angeordnet. Es ist jedoch auch denkbar, dass der weitere Temperatursensor insbesondere an einer von der Position des ersten Temperatursensors verschiedenen Position, insbesondere außerhalb des Nahbereichs eines Brenners, angeordnet sein kann. Insbesondere ermittelt das weitere Auswertemodul die weitere Temperatur-Kenngröße gleichzeitig und zwar dann wenn das Auswertemodul die Temperatur-Kenngröße ermittelt. Es ist jedoch auch denkbar, dass das weitere Auswertemodul die weitere Temperatur-Kenngröße zeitlich versetzt und zwar insbesondere vor und/oder nachdem das Auswertemodul die Temperatur-Kenngröße ermittelt. Hierdurch kann zumindest eine homogene Redundanz geschaffen werden, wodurch insbesondere ein Fehlbetriebszustand und/oder ein Ausfall zumindest eines der Temperatursensoren erkannt und insbesondere kompensiert werden kann.

Des Weiteren wird vorgeschlagen, dass die Referenztemperatur-Kenngröße die weitere Temperatur-Kenngröße ist, wodurch ein direkter Vergleich zwischen der Temperatur-Kenngröße und der weiteren Temperatur-Kenngröße erfolgen kann. Hierdurch kann eine Erkennung eines Temperaturstaus und/oder einer Fehlfunktion eines der Temperatursensoren und/oder der Auswerteeinheit, insbesondere der Auswertemodule der Auswerteeinheit, erkannt werden.

Es wird ferner vorgeschlagen, dass die Heizgerätevorrichtung eine Steuereinheit umfasst, welche zumindest teilweise einstückig mit der Schutzeinheit verbunden und dazu vorgesehen ist, bei dem Fehlerbetriebszustand zumindest einen Brennvorgang anzupassen und insbesondere abzubrechen. Unter einer "Steuereinheit" soll in diesem Zusammenhang eine Einheit verstanden werden, welche zumindest dazu vorgesehen ist, zumindest einen Betrieb der Heizgerätevorrichtung zu steuern und/oder zu regeln. Die Steuereinheit ist insbesondere eine elektrische und/oder elektronische Einheit, welche zumindest eine Steuerelektronik aufweist. Unter einer "Steuerelektronik" soll insbesondere eine Einheit mit einer Recheneinheit und mit einer Speichereinheit sowie mit einem in der Speichereinheit gespeicherten Betriebs-, Steuer- und/oder Regelprogramm, welches insbesondere dazu vorgesehen ist, von der Steuereinheit ausgeführt zu werden, verstanden werden. Alternativ ist denkbar, dass die Steuereinheit und die Speichereinheit getrennt ausgebildet sind. Unter "zumindest teilweise einstückig" soll in diesem Zusammenhang insbesondere verstanden werden, dass zumindest ein Bauteil zumindest eines Objekts und/oder zumindest ein erstes Objekt einstückig mit zumindest einem Bauteil zumindest eines weiteren Objekts und/oder einstückig mit zumindest einem weiteren Objekt ausgebildet ist. Insbesondere ist die Auswerteinheit und/oder die Funktionseinheit der Schutzeinheit einstückig mit der Steuereinheit verbunden. Unter "einstückig" soll in diesem Zusammenhang insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess. Vorteilhaft soll unter einstückig auch einteilig verstanden werden. Unter "einteilig" soll insbesondere in einem Stück geformt verstanden werden. Vorzugsweise wird dieses eine Stück aus einem einzelnen Rohling, einer Masse und/oder einem Guss, besonders bevorzugt in einem Spritzgussverfahren, insbesondere einem Ein- und/oder Mehrkomponenten-Spritzgussverfahren, hergestellt. Besonders bevorzugt soll hier unter einstückig auch integriert verstanden werden. Im vorliegenden Fall ist insbesondere die Auswerteeinheit und/oder die Funktionseinheit in die Steuereinheit integriert, wobei vorzugsweise die Auswerteeinheit und/oder die Funktionseinheit auf einer selben Platine mit der Steuereinheit verbaut sind. Hierdurch können Bauteile eingespart und damit Kosten reduziert werden.

In einer bevorzugten Ausgestaltung der Erfindung wird vorgeschlagen, dass die Temperatursensoreinheit zumindest einen Temperatursensor umfasst, welcher, vorzugsweise zur Sensierung einer Temperatur, zumindest ein photoempfindliches Element aufweist. Insbesondere für den Fall, dass die Temperatursensoreinheit mehrere Temperatursensoren umfasst, ist es denkbar, dass zumindest einer, insbesondere jeder, der Temperatursensoren ein photoempfindliches Element aufweist. Bei dem photoempfindlichen Element handelt es sich insbesondere um eine Photodiode und zwar besonders bevorzugt um eine Infrarotphotodiode. Das photoempfindliche Element ist insbesondere dazu vorgesehen, Wärmestrahlung, insbesondere eine von dem Brenner abgegebene Wärmestrahlung, zu sensieren. Unter einer "Infrarotphotodiode" soll insbesondere eine Photodiode verstanden werden, welche zu einer Messung eines infraroten Strahlungsbereichs, vorzugweise im Bereich der Wärmestrahlung, vorgesehen ist und dort insbesondere eine maximale Empfindlichkeit aufweist. Unter einem "Wärmestrahlungsbereich" soll dabei insbesondere nahes Infrarot, vorzugsweise mit Wellenlängen zwischen 0,78 µm und 3,00 µm, mittleres Infrarot, vorzugsweise mit Wellenlängen zwischen 3 µm und 50 µm und/oder fernes Infrarot, vorzugsweise mit Wellenlängen zwischen 50 µm und 1000 um, verstanden werden. Ferner kann es sich alternativ oder zusätzlich bei dem photoempfindlichen Element auch um einen Photoresistor und/oder insbesondere einen Phototransistor handeln. Hierdurch kann eine kostengünstige und kontaktfreie insbesondere von dem Brenner beabstandete Sensierung der Temperatur einer Brennerflamme erfolgen.

In einer besonders bevorzugten Ausgestaltung der Erfindung wird vorgeschlagen, dass die Temperatursensoreinheit zumindest einen Temperatursensor umfasst, welcher, vorzugsweise zur Sensierung einer Temperatur, zumindest einen Thermistor aufweist. Insbesondere für den Fall, dass die Temperatursensoreinheit mehrere Temperatursensoren umfasst, ist es denkbar, dass zumindest einer, insbesondere jeder, der Temperatursensoren einen Thermistor aufweist. Bei dem Thermistor kann es sich insbesondere um einen Kaltleiter und/oder einen Heißleiter handeln. Es ist insbesondere denkbar, dass der Temperatursensor, vorzugsweise zur Sensierung einer Temperatur, eine Diode, eine Triode, einen Transistor und/oder insbesondere ein Peltier-Element aufweist. Hierdurch kann eine kostengünstige und kontaktfreie insbesondere von dem Brenner beabstandete Sensierung der Temperatur einer Brennerflamme erfolgen.

Ferner wird ein Verfahren zum Betrieb einer Heizgerätevorrichtung vorgeschlagen, bei welchem mittels zumindest einer von einem Temperatursensor ermittelten Temperatur-Kenngröße ein Fehlerbetriebszustand erkannt wird. Hierdurch kann eine Betriebssicherheit erhöht werden.

Die Hausgerätevorrichtung soll hierbei nicht auf die oben beschriebene Anwendung und Ausführungsform beschränkt sein. Insbesondere kann die Hausgerätevorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnung

Weitere Vorteile ergeben sich aus der folgenden Zeichnungsbeschreibung. In der Zeichnung sind mehrere Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung einer Heizgerätevorrichtung,
- Fig. 2: eine schematische Darstellung eines weiteren Ausführungsbeispiels der Heizgerätevorrichtung mit zwei Temperatursensoren,
- Fig. 3: eine schematische Darstellung eines alternativen Ausführungsbeispiels der Heizgerätevorrichtung mit einem Auswertemodul und
- Fig. 4: eine schematische Darstellung eines weiteren alternativen Ausführungsbeispiels der Hausgeräteeinheit mit einem Auswertemodul und zwei Temperatursensoren.

### Beschreibung der Ausführungsbeispiele

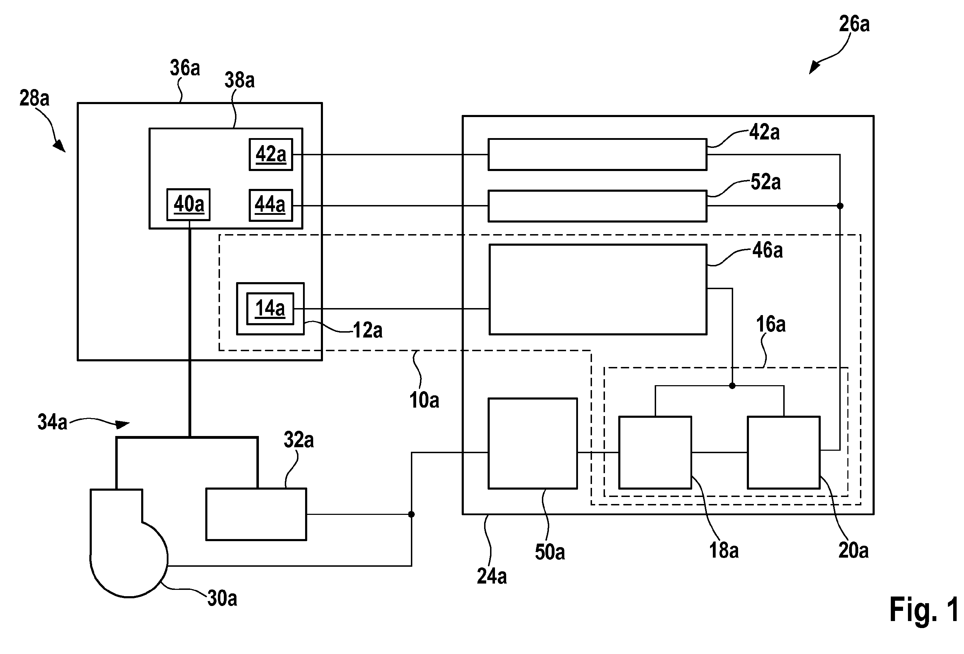

Figur 1 zeigt ein beispielhaft als Gasbrenner ausgebildetes Heizgerät 26a in einer schematischen Darstellung. Das Heizgerät 26a weist eine Heizgerätevorrichtung auf.

Die Heizgerätevorrichtung umfasst eine Heizeinheit 28a. Die Heizeinheit 28a weist einen Verbrennungsluftdosierer 30a auf. Der Verbrennungsluftdosierer 30a ist als Aktor ausgebildet. Im vorliegenden Fall ist der Verbrennungsluftdosierer 30a als drehzahlvariables Gebläse ausgebildet. Der Verbrennungsluftdosierer 30a ist dazu vorgesehen, einen Verbrennungsluftstrom zu erzeugen und/oder zu fördern. Zudem ist der Verbrennungsluftdosierer 30a dazu vorgesehen, eine Verbrennungsluftmenge einzustellen.

Die Heizeinheit 28a umfasst ferner einen Brennstoffdosierer 32a. Der Brennstoffdosierer 32a ist als Aktor ausgebildet. Im vorliegenden Fall ist der Brennstoffdosierer 32a als ein durchsatzvariables und insbesondere elektronisches Brennstoffventil ausgebildet. Der Brennstoffdosierer 32a ist als Regelventil ausgebildet. Der Brennstoffdosierer 32a ist dazu vorgesehen, einen Brennstoffstrom zu erzeugen und/oder zu fördern. Im vorliegenden Fall ist der Brennstoffdosierer 32a dazu vorgesehen, ein Gas zu fördern. Zudem ist der Brennstoffdosierer 32a dazu vorgesehen, eine Brennstoffmenge einzustellen.

Ferner umfasst die Heizeinheit 28a eine Zufuhreinheit 34a. Die Zufuhreinheit 34a umfasst einen Verbrennungsluftweg. Der Verbrennungsluftweg ist dazu vorgesehen, den Verbrennungsluftstrom zu führen. Die Zufuhreinheit 34a umfasst ferner einen Brennstoffweg. Der Brennstoffweg ist dazu vorgesehen, den Brennstoffstrom zu führen. Darüber hinaus umfasst die Zufuhreinheit 34a einen Verbrennungsluft-BrennstoffGemischstromweg. Der Verbrennungsluft-Brennstoff-Gemischstromweg ist dazu vorgesehen, den Verbrennungsluftstrom mit dem Brennstoffstrom zu mischen. Der Verbrennungsluft-Brennstoff-Gemischstromweg ist dazu vorgesehen, einen Gemischstrom, insbesondere einen Verbrennungsluft-Brennstoff-Gemischstrom, zu führen.

Die Heizeinheit 28a umfasst einen Brennraum 36a. Der Brennraum 36a ist ein geschlossener Brennraum 36a. Die Zufuhreinheit 34a führt dem Brennraum 36a das Verbrennungsluft-Brennstoff-Gemisch zu. Innerhalb des Brennraums 36a findet eine Verbrennung des Verbrennungsluft-Brennstoff-Gemischs statt.

Die Heizeinheit 28a weist eine Verbrennungseinheit 38a auf. Die Verbrennungseinheit 38a ist innerhalb des Brennraums 36a angeordnet. Die Verbrennungseinheit 38a ist dazu vorgesehen, ein Verbrennungsluft-Brennstoff-Gemisch des Gemischstroms zu verbrennen. Die Verbrennungseinheit 38a, weist einen Brenner 40a auf, welcher dazu vorgesehen ist, eine Brennerflamme zu erzeugen. Zu einer Entzündung des Verbrennungsluft-Brennstoff-Gemischs weist die Verbrennungseinheit 38a ferner ein Zündelement 42a auf. Des Weiteren weist die Verbrennungseinheit 38a eine Sensoreinheit 44a auf. Im vorliegenden Fall ist die Sensoreinheit 44a in einem Nahbereich der Brennerflamme des Brenners 40a angeordnet. Die Sensoreinheit 44a ist als Ionisationselektrode ausgebildet. Die Sensoreinheit 44a ist im vorliegenden Fall dazu vorgesehen, eine Luftzahl-Kenngröße der Verbrennung zu messen. Die Luftzahl-Kenngröße entspricht einer Steuer- und/oder Regelgröße. Im vorliegenden Fall entspricht die LuftzahlKenngröße einem Ionisationswert der Verbrennung.

Die Heizgerätevorrichtung weist ferner eine Schutzeinheit 10a auf. Die Schutzeinheit 10a ist zu einer Thermosicherung der Heizeinheit 28a vorgesehen. Dazu weist die Schutzeinheit 10a eine Temperatursensoreinheit 12a auf. Die Temperatursensoreinheit 12a ist im Brennraum 36a angeordnet. Die Temperatursensoreinheit 12a misst in zumindest einem Betriebszustand kontinuierlich eine Temperatur. Die Temperatursensoreinheit 12a weist zumindest einen Temperatursensor 14a auf. Bei dem Temperatursensor 14a handelt es sich im vorliegenden Fall um ein elektrisches und/oder elektronisches Bauteil. Der Temperatursensor 14a ist zum Sensieren einer Temperatur vorgesehen. Der Temperatursensor 14a ist innerhalb des Brennraums 36a angeordnet.

Der Temperatursensor 14a ist in einem Nahbereich des Brenners 40a angeordnet. Zu einer Sensierung einer Temperatur ist es denkbar, dass der Temperatursensor eine Diode, eine Triode, einen Transistor und/oder insbesondere ein Peltier-Element umfasst. Im vorliegenden Fall weist der Temperatursensor 14a jedoch vorteilhaft zur Sensierung einer Temperatur ein photoempfindliches Element auf. Bei dem photoempfindlichen Element handelt es sich um eine Photodiode. Die Photodiode ist als eine Infrarotphotodiode ausgebildet. Ferner kann es sich bei dem photoempfindlichen Element auch um einen Photoresistor und/oder insbesondere einen Phototransistor handeln. Es ist jedoch auch denkbar, dass der Temperatursensor einen Thermistor zur Sensierung einer Temperatur umfasst. Insbesondere könnte es sich bei dem Thermistor um einen Kaltleiter und/oder Heißleiter handeln. Ferner könnte die Temperatursensoreinheit einen weiteren Temperatursensor umfassen. Der weitere Temperatursensor kann dann zumindest im Wesentlichen äquivalent zu dem Temperatursensor ausgebildet sein. Es ist jedoch auch denkbar, dass sich der weitere Temperatursensor durch das die Temperatur sensierende Element, wie beispielsweise einen Thermistor, von dem Temperatursensor unterscheidet.

Die Temperatursensoreinheit 12a umfasst ferner ein Sensorschutzelement (hier nicht gezeigt). Das Sensorschutzelement schützt den Temperatursensor 14a vor der Brennerflamme, sowie vor einer Überhitzung. Das Sensorschutzelement definiert einen Aufnahmeraum, in welchem der Temperatursensor 14a angeordnet ist. Bei dem Sensorschutzelement kann es sich insbesondere um einen Schutzbehälter handeln. Für den Fall, dass der Temperatursensor 14a ein photoempfindliches Element aufweist, umfasst das Sensorschutzelement eine Sensieröffnung. Die Sensieröffnung ist dem Brenner 40a zugewandt. Die Sensieröffnung ist durch ein insbesondere im infraroten Strahlungsbereich transparentes Sichtfenster abgedeckt.

Die Schutzeinheit 10a umfasst weiterhin eine Funktionseinheit 46a. Die Funktionseinheit 46 ist dazu vorgesehen, ein von der Temperatursensoreinheit 12a bei einer Messung und/oder bei einer Sensierung mittels der Temperatursensoreinheit 12a und/oder mittels des Temperatursensors 14a bereitgestelltes, vorzugsweise analoges, Ausgangssignal aufzubereiten, zu verstärken und/oder vorzugsweise Störsignale zu vermindern. Dazu kann die Funktionseinheit 46a, vorzugsweise je Temperatursensor, zumindest einen Verstärker, Filter und/oder einen Strom-Spannungswandler aufweisen. Die Funktionseinheit 46a ist elektrisch mit der Temperatursensoreinheit 12a verbunden. Ferner ist die Funktionseinheit 46a elektrisch mit dem Temperatursensor 14a verbunden.

Die Schutzeinheit 10a umfasst ferner eine Auswerteeinheit 16a. Die Auswerteeinheit 16a ermittelt in zumindest einem Betriebszustand auf Basis zumindest einer Messung der Temperatursensoreinheit 12a und/oder insbesondere zumindest einer Sensierung mittels des Temperatursensors 14a, zumindest eine Temperatur-Kenngröße. Im vorliegenden Fall ist die Auswerteeinheit 16a zusätzlich dazu vorgesehen, eine weitere Temperatur-Kenngröße zu ermitteln. Die Auswerteeinheit 16a ist dazu mit der Funktionseinheit 46a elektrisch verbunden. Die Auswerteeinheit 16a umfasst im vorliegenden Fall ein Auswertemodule 18a. Ferner umfasst die Auswerteeinheit 16a ein weiteres Auswertemodul 20a. Die Auswertemodule 18a, 20a sind zueinander zumindest im Wesentlichen äquivalent ausgebildet. Die Auswertemodule 18a, 20a sind dazu vorgesehen, ein von der Temperatursensoreinheit 12a bei einer Messung und/oder insbesondere einer Sensierung mittels des Temperatursensors 14a bei einer Sensierung bereitgestelltes, vorzugsweise analoges, und insbesondere von der Funktionseinheit 46a aufbereitetes Ausgangssignal in die Temperatur-Kenngröße und die weitere Temperatur-Kenngröße umzuwandeln. Ferner sind die Auswertemodule 18a, 20a dazu vorgesehen, das Ausgangssignal zu digitalisieren. Die Auswertemodule 18a, 20a sind elektrisch mit der Funktionseinheit 46a verbunden. Die Auswertemodule 18a, 20a sind miteinander elektrisch verbunden.

Des Weiteren weist die Heizgerätevorrichtung eine Steuereinheit 24a auf. Die Steuereinheit 24a ist dazu vorgesehen, eine angeforderte Heizleistung bereitzustellen. Die Steuereinheit 24a ist zumindest dazu vorgesehen, einen Betrieb der Heizgerätevorrichtung zu steuern. Dazu weist die Steuereinheit 24a eine Recheneinheit, eine Speichereinheit und ein in der Speichereinheit hinterlegtes Betriebsprogramm auf, das dazu vorgesehen ist, von der Recheneinheit ausgeführt zu werden.

Die Steuereinheit 24a weist zur Steuerung des Zündelements 42a ein Zündsteuergerät 48a auf. Das Zündsteuergerät 48a ist elektrisch mit dem Zündelement 42a verbunden. Des Weiteren weist die Steuereinheit 24a ein Dosiersteuergerät 50a zur Steuerung des Verbrennungsluftdosierers 30a und des Brennstoffdosierers 32a auf. Das Dosiersteuergerät 50a ist elektrisch mit dem Verbrennungsluftdosierer 30a und dem Brennstoffdosierer 32a verbunden. Ferner weist die Steuereinheit 24a eine Detektoreinheit 52a auf. Die Detektoreinheit 52a ist zu einer Ermittlung einer Luftzahl-Kenngröße vorgesehen, welche mittels der Sensoreinheit 44a sensiert wird. Die Detektoreinheit 52a ist elektrisch mit der Sensoreinheit 44a verbunden. Alternativ ist denkbar, dass eine drahtlose Verbindung mit einem Verbrennungsluftdosierer, einem Brennstoffdosierer und/oder einer Verbrennungssensoreinheit besteht. Ferner könnten eine Steuereinheit und eine Speichereinheit separat ausgebildet sein.

Die Steuereinheit 24a ist zumindest teilweise einstückig mit der Schutzeinheit 10a ausgebildet. Im vorliegenden Fall ist die Funktionseinheit 46a der Schutzeinheit 10a in die Steuereinheit 24a integriert. Dabei umfasst die Steuereinheit 24a auch die Funktionseinheit 46a. Ferner ist die Auswerteeinheit 16a der Schutzeinheit 10a in die Steuereinheit 24a integriert. Dabei umfasst auch die Steuereinheit 24a die Auswerteeinheit 16a. Die Auswerteeinheit 16a und/oder die Funktionseinheit 46a sind auf einer selben Platine der Steuereinheit 24a verbaut. Des Weiteren ist die Auswerteeinheit 16a mit dem Dosiersteuergerät 50a elektrisch verbunden. Genauer gesagt ist das Auswertemodul 18a mit dem Dosiersteuergerät 50a elektrisch verbunden. Die Auswerteeinheit 16a ist mit der Detektoreinheit 52a elektrisch verbunden. Genauer gesagt ist das weitere Auswertemodul 20a mit der Detektoreinheit 52a elektrisch verbunden. Ferner ist die Auswerteeinheit 16a mit dem Zündsteuergerät 48a elektrisch verbunden. Genauer gesagt ist das weitere Auswertemodul 20a mit dem Zündsteuergerät 48a elektrisch verbunden.

Die Schutzeinheit 10a schützt in zumindest einem Betriebszustand die Heizeinheit 28a, den Brennraum 36a, die Verbrennungseinheit 38a und/oder den Brenner 40a vor einem Fehlerbetrieb. Hierdurch können Fehlfunktionen erkannt und insbesondere Materialschäden vermieden werden. Ferner schützt die Schutzeinheit 10a in einem weiteren Betriebszustand vor einem Temperaturstau. Beispielsweise kann es zu einem Temperaturstau kommen, wenn ein zu starkes Anheizen mittels der Verbrennungseinheit 38a vorgenommen wird. Ein Temperaturstau kann zu einem Druckanstieg innerhalb der Heizeinheit 28a und damit zu einer Beschädigung dieser führen. Ferner ist es denkbar, dass dadurch auch Verschmutzungen und/oder Blockierungen der Heizeinheit 28a erkannt werden können.

Um einen Fehlerbetriebszustand zu erkennen, vergleicht die Auswerteeinheit 16a in einem Betriebszustand zumindest eine Temperatur-Kenngröße mit zumindest einer Referenztemperatur-Kenngröße. Ferner kann die Auswerteeinheit 16a auch die weitere Temperatur-Kenngröße mit der Referenztemperatur-Kenngröße vergleichen. Weicht zumindest eine der Temperatur-Kenngrößen von der Referenztemperatur-Kenngröße ab, erkennt die Auswerteinheit einen Fehlerbetriebszustand. Für den Fall eines Fehlerbetriebszustands passt die Schutzeinheit 10a einen Brennvorgang an. Dazu ist die Schutzeinheit 10a elektrisch mit dem Zündsteuergerät 48a und dem Dosiersteuergerät 50a verbunden. Die Steuereinheit 24a steuert dann mittels des Zündsteuergeräts 48a das Zündelement 42a und mittels des Dosiersteuergeräts 50a den Verbrennungsluftdosierer 30 und/oder den Brennstoffdosierer 32a an und/oder unterbricht deren Funktion. Die Referenztemperatur-Kenngröße ist im vorliegenden Fall eine vordefiniert Kenngröße. Die vordefinierte Kenngröße ist eine werkseitige oder durch einen Benutzer vorgegebene Kenngröße. Im vorliegenden Fall ist die vordefinierte Kenngröße in der Speichereinheit der Steuereinheit 24a gespeichert.

Ferner kann die Referenztemperatur-Kenngröße auch die weitere Temperatur-Kenngröße, vorzugsweise die jeweils andere Temperatur-Kenngröße der Auswertemodule 18a, 20a sein. Hierdurch werden die Temperatur-Kenngröße und die weitere Temperatur-Kenngröße miteinander verglichen. Weichen die Temperatur-Kenngrößen voneinander ab, erkennt die Auswerteeinheit 16a einen weiteren Fehlerbetriebszustand. Dabei kann zwischen mehreren Fällen unterschieden werden. Wurden die Temperatur-Kenngröße und die weitere Temperatur-Kenngröße zeitgleich ermittelt, kann hier eine Fehlfunktion der Auswertemodule 18a, 20a erkannt werden. Es ist jedoch auch denkbar, dass das Auswertemodul 18a und das weitere Auswertemodul 20a die Temperatur-Kenngröße und die weitere Temperatur-Kenngröße zueinander zeitversetzt ermitteln. Vergleicht die Auswerteeinheit 16a diese zeitversetzten Temperatur-Kenngrößen miteinander, kann auf einen Temperaturstau geschlossen werden.

Ferner ist es denkbar, dass die Temperatursensoreinheit einen weiteren Temperatursensor aufweist. Mittels des weiteren Temperatursensors ermittelt das Auswertemodul dann zumindest in einem Betriebszustand die weitere Temperatur-Kenngröße.

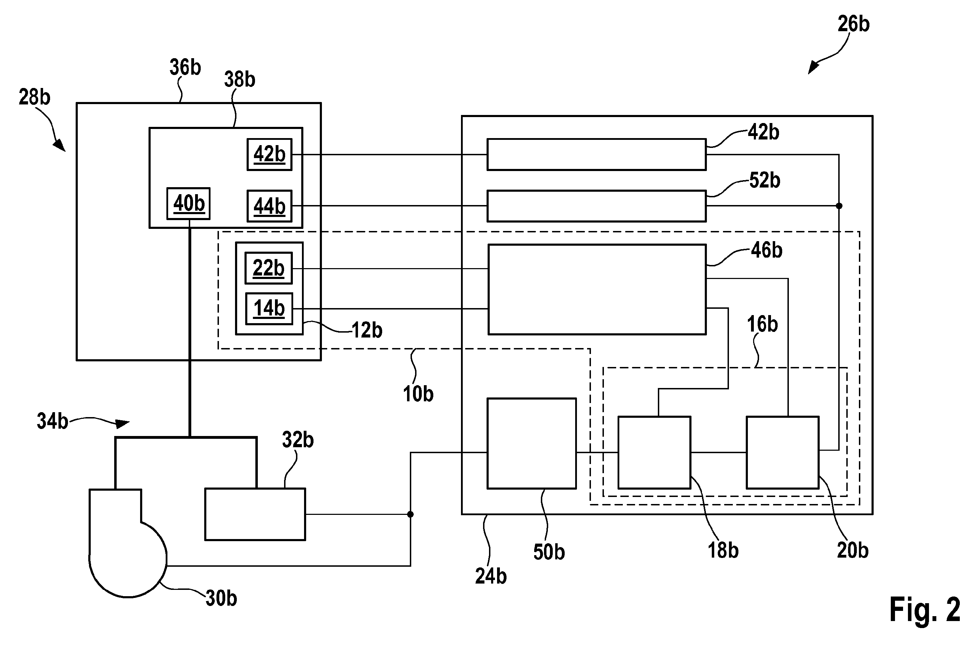

In den Figuren 2, 3 und 4 sind weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figur 1, verwiesen werden kann. Zur Unterscheidung der Ausführungsbeispiele ist der Buchstabe a den Bezugszeichen des Ausführungsbeispiels in der Figur 1 nachgestellt. In den Ausführungsbeispielen der Figuren 2, 3 bis 4 ist der Buchstabe a durch die Buchstaben b bis d ersetzt.

Figur 2 zeigt ein weiteres Ausführungsbeispiel einer Heizgerätevorrichtung, welchem der Buchstabe b nachgestellt ist. Das weitere Ausführungsbeispiel der Figur 2 unterscheidet sich von dem vorhergehenden Ausführungsbeispiel der Figur 1 zumindest im Wesentlichen dadurch, dass die Heizgerätevorrichtung eine Temperatursensoreinheit 12b umfasst, welche zumindest einen weiteren Temperatursensor 22b aufweist. Hierdurch kann eine homogene Redundanz erzeugt werden. Eine Ermittlung einer weiteren Temperatur-Kenngröße erfolgt im vorliegenden Fall dabei mittels eines weiteren Auswertemoduls 20b. In anderen Worten ist das weitere Auswertemodul 20b zu einer Ermittlung der weiteren Temperatur-Kenngröße mittels des weiteren Temperatursensors 22b vorgesehen. Im vorliegenden Fall ermitteln die Auswertemodule 18b, 20b in einem Betriebszustand die Temperatur-Kenngrößen mittels unterschiedlicher Temperatursensoren 14b, 22b. Durch einen Vergleich der Temperatur-Kenngrößen kann dann ein Fehlerbetrieb der Temperatursensoren 14b, 22b ermittelt werden. Ferner ist es auch vorstellbar, dass die Temperatursensoren 14b, 22b an verschiedenen Positionen innerhalb des Brennraums 36b angeordnet ist. Vergleicht eine Auswerteeinheit 16b die Temperatur-Kenngrößen miteinander, kann auf einen räumlichen Temperaturgradienten, beispielsweise eine Temperaturverteilung innerhalb des Brennraums 36b, und damit auf einen Temperaturstau geschlossen werden. Der räumliche Temperaturgradient könnte dann insbesondere mit einem Referenz-Temperaturgradienten, welcher insbesondere in einer Speichereinheit gespeichert ist, verglichen werden. Hierdurch kann ebenfalls ein Fehlbetriebszustand von Leitungen, beispielsweise einer Zufuhreinheit 34b, geschlossen werden.

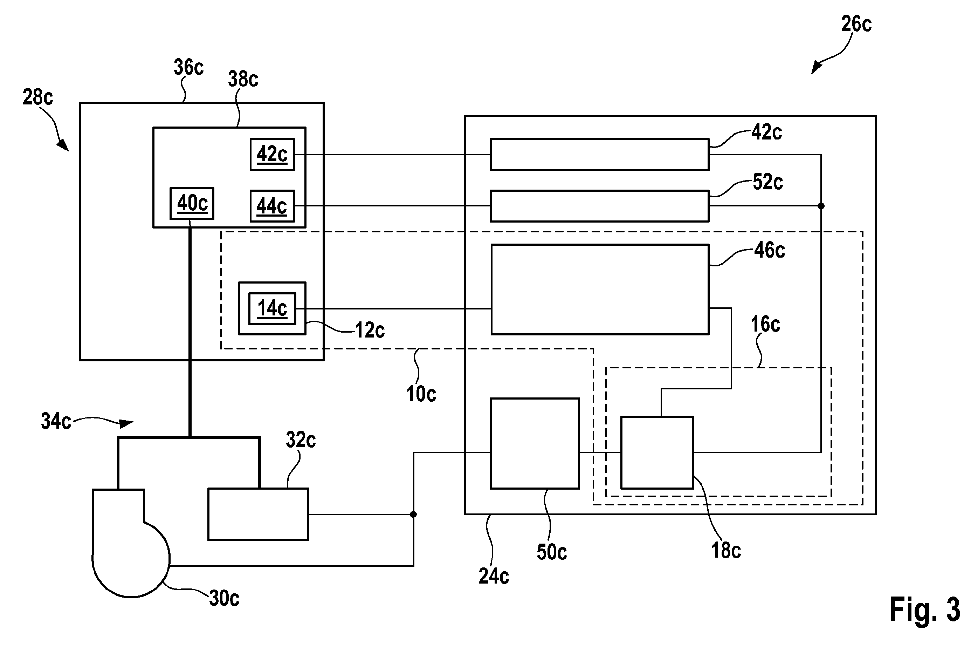

Figur 3 zeigt ein alternatives Ausführungsbeispiel einer Heizgerätevorrichtung, welchem der Buchstabe c nachgestellt ist. Das alternative Ausführungsbeispiel der Figur 3 unterscheidet sich von dem vorhergehenden Ausführungsbeispiel der Figur 1 zumindest im Wesentlichen dadurch, dass die Heizgerätevorrichtung eine Auswerteeinheit 16c umfasst, welche nur ein einziges Auswertemodul 18c aufweist. Hierdurch können bauteilkosten reduziert werden. Im vorliegenden Fall ermittelt das Auswertemodul 18c die Temperatur-Kenngröße und die weiteren Temperatur-Kenngrößen zeitlich nacheinander. Vergleicht die Auswerteeinheit 16c diese miteinander, kann auf einen zeitlichen Temperaturgradienten, beispielsweise einen Temperaturanstieg und/oder Temperaturabfall innerhalb des Brennraums 36c, und damit auf einen Temperaturstau geschlossen werden. Der zeitliche Temperaturgradient kann dann mit einem Referenz-Temperaturgradienten verglichen werden. Hierdurch kann zusätzlich ein Fehlbetriebszustand eines Brenners 40c erkannt werden.

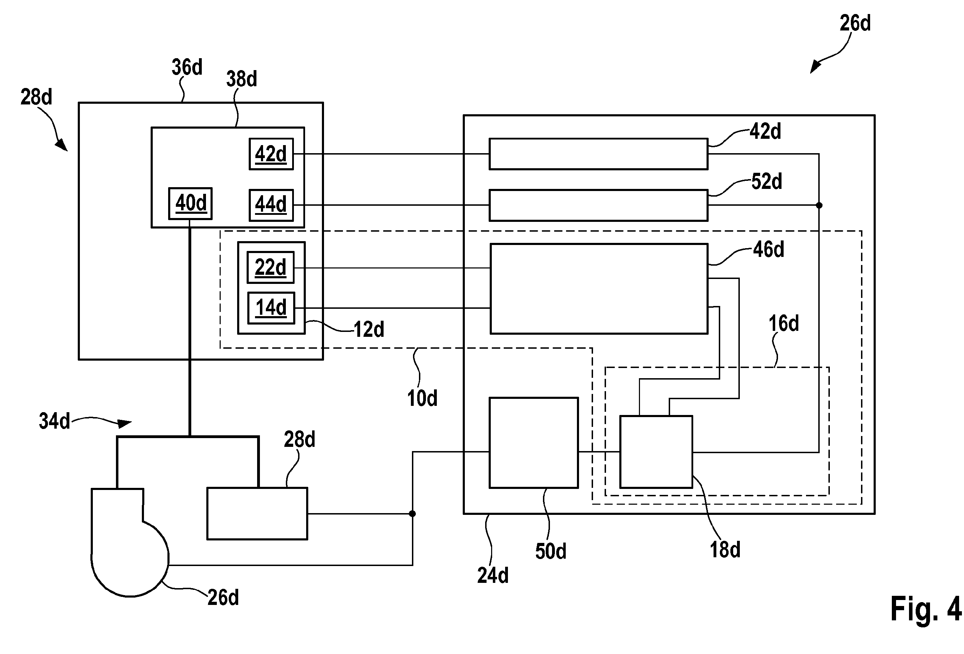

Figur 4 zeigt ein weiteres alternatives Ausführungsbeispiel einer Heizgerätevorrichtung, welchem der Buchstabe d nachgestellt ist. Das weitere alternative Ausführungsbeispiel der Figur 4 unterscheidet sich von dem vorhergehenden Ausführungsbeispiel der Figur 1 zumindest im Wesentlichen dadurch, dass die Heizgerätevorrichtung eine Auswerteeinheit 16d umfasst, welche nur ein einziges Auswertemodul 18d aufweist. Ferner weist die Heizgerätevorrichtung eine Temperatursensoreinheit 12d auf, welche einen Temperatursensor 14d und einen weiteren Temperatursensor 22d umfasst. Hierdurch kann eine homogene Redundanz, insbesondere der Temperatursensoren, erreicht werden. Im vorliegenden Fall ermittelt das Auswertemodul 18d die Temperatur-Kenngröße mittels des Temperatursensors 14d und die weiteren Temperatur-Kenngrößen mittels des weiteren Temperatursensors 22d. Die Ermittlung der Temperatur-Kenngrößen erfolgt dabei zeitlich nacheinander.

## Patentansprüche

1. Heizgerätevorrichtung, insbesondere Gas- und/oder Ölbrennervorrichtung, mit zumindest einer Schutzeinheit (10a-d), welche wenigstens eine Temperatursensoreinheit (12a-d) mit zumindest einem Temperatursensor (14a-d; 22b, 22d) und zumindest eine Auswerteeinheit (16a-d) aufweist, die zumindest ein Auswertemodul (18a-d; 20a, 20b) umfasst, welches zur Ermittlung zumindest einer Temperatur-Kenngröße mittels des Temperatursensors (14a-d, 22b, 22d) vorgesehen ist, wobei die Auswerteeinheit (16a-d) dazu vorgesehen ist, einen Fehlerbetriebszustand anhand der Temperatur-Kenngröße zu erkennen.

2. Heizgerätevorrichtung nach Anspruch 1, **dadurch gekennzeichnet, dass** die Auswerteeinheit (16a-d) dazu vorgesehen ist, den Fehlerbetriebszustand anhand eines Vergleichs der Temperatur-Kenngröße mit zumindest einer Referenztemperatur-Kenngröße zu erkennen.

3. Heizgerätevorrichtung nach Anspruch 2, **dadurch gekennzeichnet, dass** die Referenztemperatur-Kenngröße eine vordefinierte Kenngröße ist.

4. Heizgerätevorrichtung nach einem der vorhergehenden Ansprüche, **dadurch gekennzeichnet, dass** das Auswertemodul (18a-d; 20a, 20b) zur Ermittlung zumindest einer weiteren Temperatur-Kenngröße mittels des Temperatursensors (14a-d, 22b, 22d), vorgesehen ist.

5. Heizgerätevorrichtung nach einem der vorhergehenden Ansprüche, **dadurch gekennzeichnet, dass** die Auswerteeinheit (16a-d) zumindest ein weiteres Auswertemodul (18a-d; 20a, 20b) aufweist, welches zur Ermittlung zumindest einer weiteren Temperatur-Kenngröße mittels des Temperatursensors (14a-d, 22b, 22d) vorgesehen ist.

6. Heizgerätevorrichtung nach einem der vorhergehenden Ansprüche, **dadurch gekennzeichnet, dass** die Temperatursensoreinheit (12a-d) zumindest einen weiteren Temperatursensor (14a-d, 22b, 22d) umfasst und das weitere Auswertemodul (18a-d; 20a, 20b) zur Ermittlung zumindest einer weiteren Temperatur-Kenngröße mittels des weiteren Temperatursensors (14a-d, 22b, 22d) vorgesehen ist.

7. Heizgerätevorrichtung zumindest nach den Ansprüchen 2 und 4, 2 und 5 oder 2 und 6, **dadurch gekennzeichnet, dass** die Referenztemperatur-Kenngröße die weitere Temperatur-Kenngröße ist.

8. Heizgerätevorrichtung nach einem der vorhergehenden Ansprüche, **gekennzeichnet durch** eine Steuereinheit (24a-d), welche zumindest teilweise einstückig mit der Schutzeinheit (10a-d) verbunden und dazu vorgesehen ist, bei dem Fehlerbetriebszustand zumindest einen Brennvorgang anzupassen.

9. Heizgerätevorrichtung nach einem der vorhergehenden Ansprüche, **dadurch gekennzeichnet, dass** die Temperatursensoreinheit (12a-d) zumindest einen Temperatursensor (14a-d, 22b, 22d) umfasst, welcher zumindest ein photoempfindliches Element aufweist.

10. Heizgerätevorrichtung nach einem der vorhergehenden Ansprüche, **dadurch gekennzeichnet, dass** die Temperatursensoreinheit (12a-d) zumindest einen Temperatursensor (14a-d, 22b, 22d) umfasst, welcher zumindest einen Thermistor aufweist.

11. Heizgerät (26a-d) mit einer Heizgerätevorrichtung nach einem der vorhergehenden Ansprüche.

12. Verfahren zum Betrieb einer Heizgerätevorrichtung, insbesondere nach einem der Ansprüche 1 bis 11, bei welchem mittels zumindest einer von einem Temperatursensor (14a-d, 22b, 22d) ermittelten Temperatur-Kenngröße ein Fehlerbetriebszustand erkannt wird.
